Europäisches Patentamt

European Patent Office

Office européen des brevets

(19)

(11) **EP 0 672 320 B1**

(12) **FASCICULE DE BREVET EUROPEEN**

(45) Date de publication et mention
de la délivrance du brevet:
**31.03.1999 Bulletin 1999/13**

(21) Numéro de dépôt: **93901807.3**

(22) Date de dépôt: **01.12.1992**

(51) Int Cl.⁶: **H04L 5/06**, H04J 14/06

(86) Numéro de dépôt international:
**PCT/FR92/01119**

(87) Numéro de publication internationale:
**WO 94/13077 (09.06.1994 Gazette 1994/13)**

(54) **TRANSMISSION OFDM AVEC MULTIPLEXAGE EN POLARISATION**

OFDM-ÜBERTRAGUNG MIT POLARISATIONSMULTIPLEX

TRANSMISSION USING OFDM WITH POLARIZATION MULTIPLEXING

(84) Etats contractants désignés:
**AT CH DE ES FR GB IT LI**

(43) Date de publication de la demande:
**20.09.1995 Bulletin 1995/38**

(73) Titulaire: **THOMSON multimedia
92648 Boulogne Cédex (FR)**

(72) Inventeurs:
- **FOUCHE, Yvon
F-92402 Courbevoie Cédex (FR)**
- **DE COUASNON, Tristan
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 295 620        WO-A-90/04893
FR-A- 2 680 061**

- **IEEE TRANSACTIONS ON ACOUSTICS,
SPEECH AND SIGNAL PROCESSING vol. 33, no.
2, Avril 1985, NEW YORK, US pages 420 - 431
TREICHLER AND LARIMORE 'New processing
techniques based on the constant modulus
adaptive algorithm'**
- **Proceedings of the 1990 Southeastcon, New
Orleans, US, 1-4 Avril 1990; IEEE, New York,
1990; pages 975 - 980, K. V. Cartwright et al.:
"Performance of the adaptive baseband 4D
diagonalizer, a crosstalk canceller, with four
dimensional constellations"**

## Description

La présente invention concerne un procédé d'émission d'un signal numérisé selon une modulation multiporteuse de type OFDM (Orthogonal Frequency Division Multiplexing en langue anglaise) utilisant N canaux orthogonaux. La présente invention concerne aussi un émetteur et un récepteur pour la mise en oeuvre de ce procédé.

Dans la demande de brevet international WO-A-90/04893 déposée au nom de THOMSON-CSF, l'on a décrit un procédé d'émission particulièrement performant utilisant une modulation multiporteuse de type OFDM permettant d'émettre, avec une haute densité, un signal numérisé. Dans le procédé d'émission décrit, on utilise une pluralité de fréquences orthogonales et on émet un couple (amplitude-phase) ou (partie réelle - partie imaginaire) sur chaque fréquence, le couple amplitude-phase ou partie réelle - partie imaginaire étant équivalent de façon biunivoque à l'information à transmettre. D'autre part, pour récupérer au niveau du récepteur les informations transmises selon ce procédé en tenant compte des échos multiples, on utilise différentes techniques telles que l'association à l'intervalle utile d'émission d'un intervalle de transition ou intervalle de garde, l'utilisation de signaux de synchronisation et surtout l'utilisation de paquets-test qui à la réception permettent d'effectuer l'égalisation des canaux. Toutefois, lorsque l'on veut utiliser un nombre N de canaux très important, par exemple 1024 canaux, l'on a dans ce cas une occupation spectrale très importante. En effet, la bande de fréquence utilisée est d'au moins 16 MHz. Ceci pose un certain nombre de problèmes au niveau, par exemple, de la fréquence de fonctionnement des circuits de traitement des signaux.

Une solution connue est décrite dans la demande de brevet européenne EP-A-0 295 620. Il s'agit d'un dispositif de transmission de canaux exploitant deux voies de polarisation orthogonales. Cependant, l'influence du couplage des deux voies, si elle est diminuée, n'est pas négligeable et perturbe la réception des signaux.

La présente invention a pour but de proposer un nouveau procédé d'émission d'un signal numérisé selon une modulation multiporteuse de type OFDM qui permet de réduire la bande de fréquence utilisée.

La présente invention a aussi pour but de proposer un procédé d'émission d'un signal numérisé selon une modulation multiporteuse de type OFDM utilisant N canaux orthogonaux qui peut être utilisé aussi bien avec une modulation du type de celle décrite dans la demande de brevet international WO-A-90/04893 qu'avec d'autres modulations multiporteuses de type OFDM.

En conséquence, la présente invention a pour objet un procédé d'émission d'un signal numérisé selon une modulation multiporteuse de type OFDM (Orthogonal Frequency Division Multiplexing) utilisant N canaux orthogonaux, caractérisé en ce que ledit signal module ces N canaux par l'intermédiaire d'une transformation de Fourier inverse fournissant N échantillons pour moduler les N canaux, en ce que les canaux sont ensuite divisés en deux, N/2 canaux correspondant à une première bande de fréquence étant transmis par une première voie d'émission selon une première polarisation et les N/2 canaux restant étant ramenés dans la même bande de fréquence et transmis par une deuxième voie d'émission selon une seconde polarisation croisée par rapport a la première.

En utilisant ce nouveau procédé d'émission, il est possible d'avoir un nombre beaucoup plus important de canaux pour une même bande de fréquence. D'autre part, l'indépendance entre canaux est réalisée du fait que chaque canal est orthogonal aux autres canaux. De ce fait, le maximum d'amplitude d'un canal correspond au zéro de tous les autres canaux comme expliqué dans la demande PCT mentionnée ci-dessus. En conséquence, s'il y a un couplage entre les deux polarisations transportant chacune la moitié des canaux, au décodage, son influence sur les canaux est minimisée.

Selon une autre caractéristique de la présente invention, le signal numérisé émis sur chaque voie comporte périodiquement des paquets-test permettant à la réception d'égaliser le canal de transmission.

Cette caractéristique permet de compenser notamment l'atténuation d'une polarisation par rapport à l'autre, du moment que les variations de conditions de propagation d'une polarisation soient plus lentes qu'un cycle d'égalisation.

Selon un mode de réalisation particulier, on émet deux paquets-test successifs par voie et les paquets-test sont choisis de telle sorte que :

$$t_A^1(2q) \neq 0 \ ; \ t_A^2(2q) = 0 \ ; \ t_B^1(2q) = 0 \ ; \ t_B^2(2q) \neq 0$$

$$t_A^1(2q+1) = 0 \ ; \ t_A^2(2q+1) \neq 0 \ ; \ t_B^1(2q+1) \neq 0 \ ; \ t_B^2(2q+1) = 0$$

La présente invention concerne aussi un émetteur pour la mise en oeuvre du procédé ci-dessus, tel que défini par la revendication 5.

La présente invention a encore pour objet un récepteur pour recevoir des signaux émis selon le procédé ci-dessus, tel que défini par les revendications 6 et 7.

D'autres caractéristiques et avantages de la présente invention apparaîtront à la lecture de la description faite ci-après de différents modes de réalisations cette description étant faite avec référence aux dessins ci-annexés dans lesquels :

- la figure 1 est un schéma synoptique d'un émetteur pour la mise en oeuvre du procédé d'émission conforme a la présente invention ;
- la figure 2 est un schéma synoptique d'un récepteur pour la réception de signaux émis selon le procédé conforme à la présente invention ;
- la figure 3 est un schéma synoptique simplifié expliquant le choix des paquets-test, et
- la figure 4 est un schéma synoptique simplifié d'un autre mode de réalisation de le chaine de transmission conformément à la présente invention.

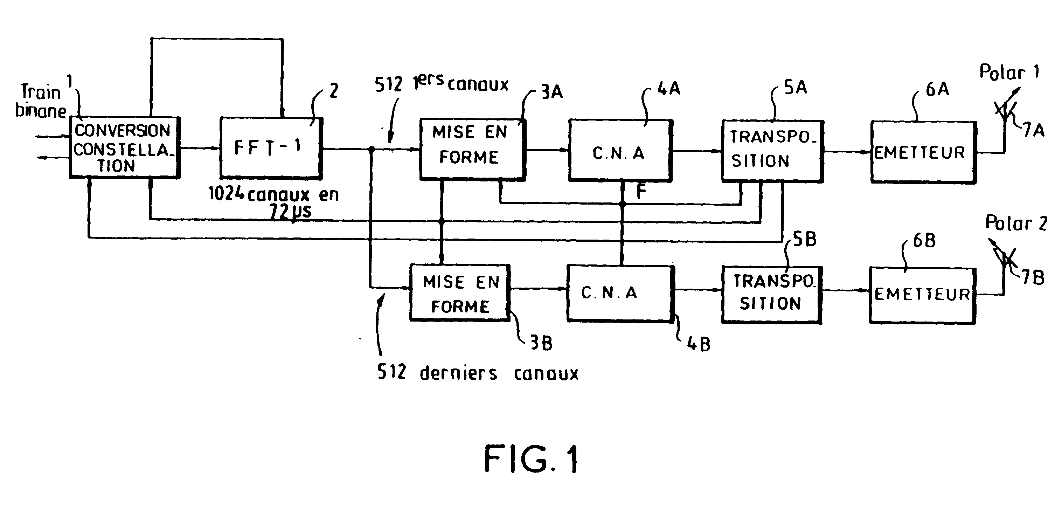

L'émetteur et le récepteur décrits ci-après sont des circuits utilisés pour émettre et recevoir des signaux numérisés en utilisant une modulation multiporteuse de type OFDM (Orthogonal Frequency Division Multiplexing en langue anglaise) utilisant N canaux orthogonaux. Dans ce cas et comme décrit dans la demande de brevet PCT mentionnée ci-dessus, le signal numérisé est découpé en une succession de paquets. La partie utile du signal est donc constituée de N signaux sinusoïdaux modulés chacun en amplitude et en phase. Dans le cadre du brevet PCT décrit ci-dessus, pour prendre en compte les trajets multiples dûs aux échos et déterminer plus facilement le signal utile, on définit un intervalle de transition ou intervalle de garde correspondant au début du paquet suivi de la partie utile du signal qui seule sera exploitée en réception. Pour réaliser la modulation en amplitude et en phase, on utilise de façon connue une constellation dans le plan complexe. Comme mentionné dans le demande de brevet citée , plusieurs types de constellations peuvent être choisis, à savoir des constellations rectangulaires, hexagonales, circulaires. Ainsi, comme représenté sur la figure 1, le train binaire issu d'un codeur non représenté et correspondant au signal numérisé à transmettre est envoyé en entrée d'une carte de conversion constellation 1 qui fait la correspondance entre les bits d'entrée regroupés par N et les points de la constellation qui sont attribués à chaque sous-porteuse. C'est au niveau du circuit de conversion-constellation que son aussi insérés, dans le signal à transmettre, des informations de synchronisation ainsi que des paquets-test qui seront décrits ultérieurement et qui sont utilisés pour l'égalisation du canal. Ce paquet-test inséré à le place d'un paquet véhiculant de l'information sert à le réception par comparaison avec un paquet de référence à déterminer des coefficients de correction à appliquer au paquet utile suivant. Ceci permet de réaliser l'égalisation du canal.

Les données en sortie du circuit 1 sont envoyées sur un circuit de calcul de transformée de Fourier rapide inverse (FFT$^{-1}$)2. Le circuit de calcul de Transformée de Fourier inverse a été décrit dans la demande de brevet WO-A-90/04893 à laquelle on se référera pour une description plus complète de son fonctionnement. Le circuit 2 permet de réaliser la modulation de N canaux à l'émission, par exemple de 1024 canaux en 72 microsecondes, dans le cas notamment où l'on souhaite transmettre des émissions de télévision.

Conformément à le présente invention, pour limiter la bande passante qui dans le cas de 1024 canaux doit être de 16 MHz, on propose dans la présente invention de séparer les canaux en deux et d'envoyer les 512 premiers canaux sur une première voie de transmission et les 512 derniers canaux sur une deuxième voie de transmission. Comme représenté sur la figure 1, chaque voie de transmission comporte essentiellement un circuit de mise en forme 3A,3B, un convertisseur numérique-analogique 4A,4B, un circuit de transposition de la fréquence en bande de base en fréquence intermédiaire 5A,5B et un émetteur proprement dit 6A,68 envoyant le signal à transmettre sur une antenne 7A,7B.

De manière plus détaillée, les circuits de mise en forme 3A,3B servent à mettre les données issues du circuit 2 de calcul de Transformée de Fourier rapide inverse (FFT$^{-1}$) au format exploitable par le circuit de conversion numérique-analogique et à rajouter l'intervalle de transition ou intervalle de garde lorsqu'on utilise un procédé d'émission avec un intervalle de garde, comme décrit dans la demande de brevet ci-dessus mentionnée. Les données issues des circuits de mise en forme 3A,3B sont envoyées sur un convertisseur numérique-analogique 4A ou 4B commande par une fréquence d'échantillonnage F et qui permet d'obtenir un signal analogique qui pourra être modulé. Les circuits de transposition 5A et 5B ont pour but de transformer la fréquence du signal analogique en une fréquence intermédiaire qui pourra être exploitée par l'émetteur. D'autre part, le circuit de transposition 5B permet de ramener le fréquence du signal analogique de cette voie dans la même bande de fréquence que le signal transmis par la première voie. Ces signaux issus des deux circuits de transposition 5A et 5B sont envoyés chacun sur un émetteur proprement dit 6A , 6B de type classique qui envoit le signal sur une antenne 7A et 7B.

Conformément à la présente invention, les antennes 7A et 7B émettent le signal selon des polarisations croisées. Ainsi par exemple, le signal envoyé par l'antenne 7A est émis avec une polarisation horizontale tandis que le signal envoyé par l'antenne 7B est émis avec une polarisation verticale, ces deux signaux étant émis dans la même bande de fréquence.

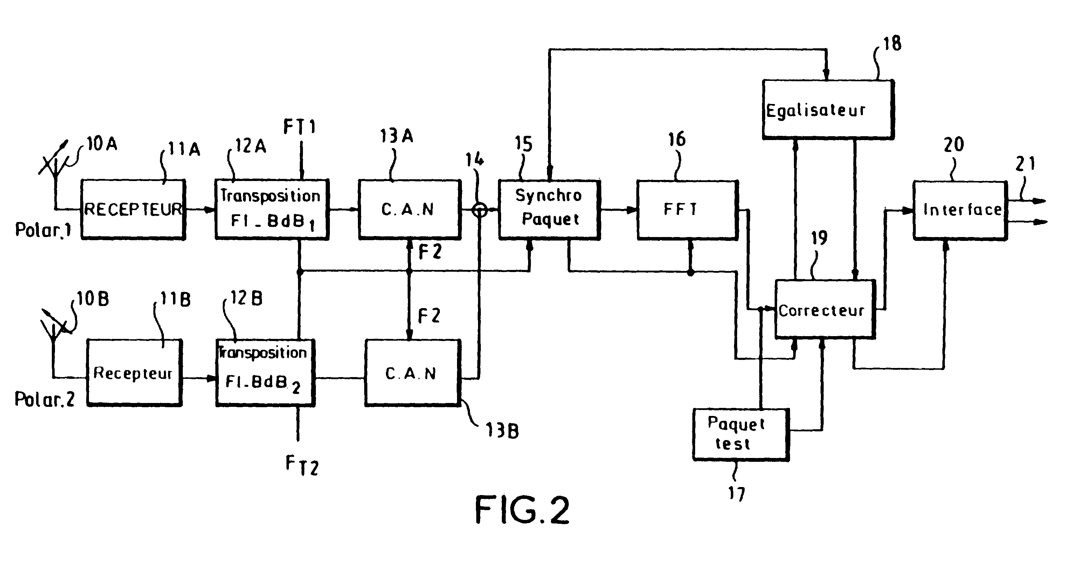

On décrira maintenant, plus particulièrement avec référence à la figure 2, un mode de réalisation d'un récepteur permettant de recevoir un signal émis selon le procédé décrit ci-dessus. Ce récepteur comporte deux voies de réception en parallèle, constituées chacune d'une antenne 10A,10B, d'un récepteur 11A,11B, d'un circuit de transposition fréquence intermédiaire en bande de base 1 et fréquence intermédiaire en bande de base 2, respectivement 12A,12B, d'un convertisseur analogique-numérique 13A,13B. Les sorties des deux convertisseurs analogiques-numériques sont envoyées à travers un additionneur 14 en entrée d'un circuit de synchronisation paquet 15 et du circuit de démodulation 16 qui sera décrit de manière plus détaillée ci-après. Les antennes 10A et 10B sont des antennes à polarisation croisée, permettant de recevoir les signaux émis par les deux antennes 7A et 7B à polarisation croisée. Les récepteurs 11A et 11B sont des récepteurs de type classique qui n'ont pas besoin d'être détaillés ici. Les circuits de transposition 12A et 12B permettent de passer de la fréquence intermédiaire dans laquelle sont émis les signaux en bande de base 1 pour la première voie de réception et en bande de base 2 pour la seconde voie de réception. Les circuits de transposition sont constitués essentiellement par un mélangeur recevant sur une de ses entrées un signal à la fréquence de transposition issu d'un oscillateur. Les convertisseurs analogique-numérique 13A, 13B permettent de transformer à la fréquence d'échantillonnage F2 le signal analogique en un signal numérique. Ces deux signaux sont additionnés dans un additionneur 14 avant d'être envoyés sur la partie démodulation du système qui est identique à celle décrite dans la demande de brevet PCT citée ci-dessus. Comme représenté sur la figure 2, cette partie démodulation comporte un circuit de synchro-paquets 15 dont le but est de réaliser la découpe temporelle du signal en paquets afin de ne fournir à un circuit de calcul de la Transformée de Fourier rapide (FFT) 16 que la partie utile des paquets en utilisant les informations de synchronisation transmise avec le signal. Cette partie comporte aussi en sortie du circuit de calcul de la Transformée de Fourier rapide (FFT) 16, un circuit 17 de détection des paquets-test envoyant des informations vers un circuit de correction 19 et un circuit d'égalisation 18 chargé des calculs des coefficients de correction qui émet vers le circuit de correction 19 un signal de correction pour chaque paquet. Les éléments issus du circuit de correction sont envoyés vers un interface 20 qui transforme les informations reçues en un train binaire émis sur la ligne 21. L'utilisation de paquets-test permet de réaliser l'égalisation et de remédier à l'atténuation qui peut exister entre les deux polarisations.

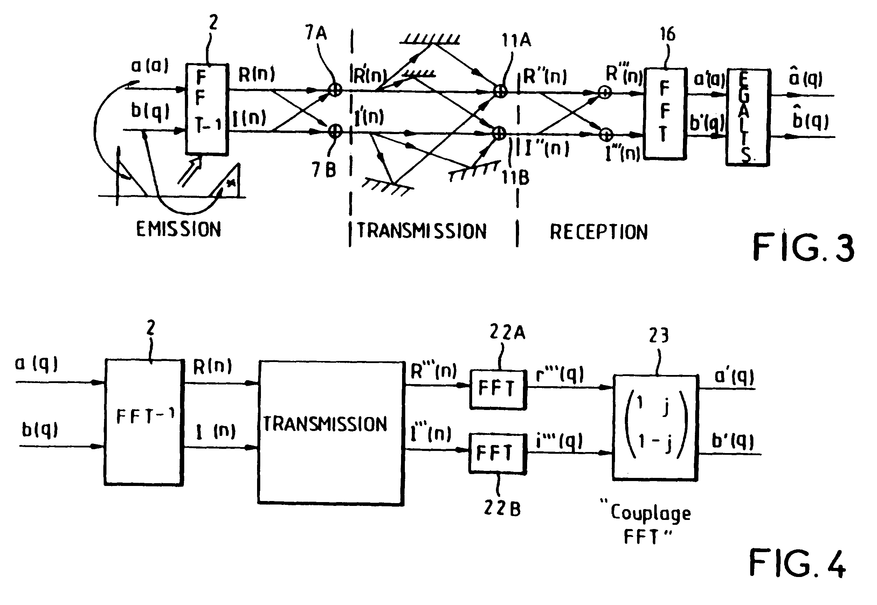

On décrira maintenant avec référence à la figure 3 un mode de calcul de la valeur des paquets-test à envoyer pour réaliser une égalisation correcte des canaux en tenant compte d'un couplage d'émission, de transmission et de réception. Comme représenté sur la figure 3, en sortie du circuit (FFT$^{-1}$) 2, on émet sur chaque voie respectivement le signal R(n) et le signal I(n) qui correspondent à la partie réelle et à la partie imaginaire.

Si l'on prend en compte les couplages qui se produisent respectivement au niveau du circuit 2 et au niveau des antennes 7A et 7B, l'on a en émission, une fois le régime stationnaire atteint, les équations suivantes :

Couplage FFT$^{-1}$

$$r(q) = \frac{1}{2} \left[ a(q) + b(q) \right]$$

$$i(q) = + \frac{1}{2j} \left[ a(q) - b(q) \right]$$

où

$$r(q) = FFT \left( R(n) \right)$$

$$i(q) = FFT \left( I(n) \right)$$

Couplage antenne

$$r'(q) = r(q) + K_{IR}\, i(q)$$

$$i'(q) = K_{IR}\, r(q) + i(q)$$

L'on émet donc par l'intermédiaire de l'antenne 7A, les signaux R'(n) et par l'intermédiaire de l'antenne 7B, les signaux I'(n). Sur les antennes de réception 10A et 10B, on reçoit des signaux respectivement R"(n) et I"(n) qui tiennent compte des couplages et des échos multiples. Ces signaux sont donnés par les équations suivantes :

$$R''(t) = \sum_i \alpha_R^i(t) * R'(t - t_i) + \sum_j \alpha_I^j(t) * I'(t - t_j)$$

$$I''(t) \sum_k \alpha_R^k(t) * R'(t - t_k) + \sum_l \alpha_I^l(t) * I'(t - t_l)$$

soit en passant en fréquence :

$$r''(q) = r'(q)[\sum_i \alpha_R^i(q) \ e^{-j\varphi(q,t_i)}]$$

$$+i'(q)[\sum_j \alpha_I^j(q) \ e^{-j\varphi(q,t_j)}]$$

$$i''(q) = r'(q)[\sum_k \alpha_R^k(q) \ e^{-j\varphi(q,t_k)}]$$

$$+i'(q)[\sum_l \alpha_I^l(q) \ e^{-j\varphi(q,t_l)}]$$

que l'on peut écrire sous la forme suivante en posant par exemple

$$C_{RR} = \sum_i \alpha_R^i(q) \ e^{-j\varphi(q,t_i)} \ :$$

$$r''(q) = C_{RR}(q) \ r'(q) + C_{IR}(q) \ i'(q)$$

$$i''(q) = C_{RI}(q) \ r'(q) + C_{II}(q) \ i'(q)$$

A la réception, ces couplages au niveau des antennes 10A, 10B et au niveau du circuit de calcul de Transformée de Fourier rapide 16 peuvent être représentés par les équations suivantes :

- <u>Couplage antennes</u>

$$r'''(q) = r''(q) + K'_{IR} \ i''(q)$$

$$i''' (q) = K'_{RI} \, r'' (q) + i''(q)$$

- <u>Couplage FFT</u>

$$a'(q) = r''' (q) + ji''' (q)$$

$$b'(q) = r''' (q) - ji''' (q)$$

Ainsi en sortie de le FFT 16, l'ensemble peut être réécrit sous forme matricielle de le manière ci-après :

$$\begin{bmatrix} a'(q) \\ b'(q) \end{bmatrix} = \underbrace{\begin{bmatrix} +1 & j \\ +1 & -j \end{bmatrix} \begin{bmatrix} 1 & K'_{IR} \\ K'_{RI} & 1 \end{bmatrix} \begin{bmatrix} C_{RR} & C_{IR} \\ C_{RI} & C_{II} \end{bmatrix} \begin{bmatrix} 1 & K_{IR} \\ K_{RI} & 1 \end{bmatrix} \begin{bmatrix} \frac{1}{2} & +\frac{1}{2} \\ -j/2 & j/2 \end{bmatrix} \begin{bmatrix} a & (q) \\ b & (q) \end{bmatrix}}_{M(q)}$$

soit en prenant la matrice inverse :

$$\begin{bmatrix} a(q) \\ b(q) \end{bmatrix} = \begin{bmatrix} \alpha(q) & \beta(q) \\ \gamma(q) & \delta(q) \end{bmatrix} \begin{bmatrix} a'(q) \\ b'(q) \end{bmatrix}$$

D'autre part, en sortie du circuit d'égalisation, on obtient les signaux $\hat{a}(q)$, $\hat{b}(q)$. Ces signaux sont tels que :

$$\begin{bmatrix} \hat{a}(q) \\ \hat{b}(q) \end{bmatrix} = \begin{bmatrix} \hat{\alpha}(q) & \hat{\beta}(q) \\ \hat{\gamma}(q) & \hat{\delta}(q) \end{bmatrix} \begin{bmatrix} a'(q) \\ b'(q) \end{bmatrix}$$

Or, avec l'égalisation, on récupère des signaux, tels que :

$$\begin{pmatrix} a(q) \\ b(q) \end{pmatrix} = \begin{pmatrix} \hat{a}(q) \\ \hat{b}(q) \end{pmatrix}$$

Il faut donc estimer la matrice

$$\begin{pmatrix} \hat{\alpha}(q) & \hat{\beta}(q) \\ \hat{\gamma}(q) & \hat{\delta}(q) \end{pmatrix}$$

Conformément à la présente invention, pour estimer cette matrice, on émet deux paquets-test par voie, soit : $t_A^1$, $t_B^1$, $t_A^2$, $t_B^2$ et l'on reçoit $t'^1_A$, $t'^1_B$, $t'^2_A$, $t'^2_B$.
$t_A^1$ est le paquet-test pour lequel :

-    l'indice (A ou B) définit la voie ;

-    l'exposant (1 ou 2) correspond au numéro du paquet sur la voie (1er ou 2ème paquet).

Soit $t_A^1(q)$ l'échantillon q parmi les N,
et soit $t_A^1(2q)$ l'échantillon pair, $t_A^1(2q+1)$ l'échantillon impair.

$$t_A^1(q) = \alpha(q)t'^1_A(q) + \beta(q)t'^1_B(q)$$

$$t_A^2(q) = \alpha(q)t'^2_A(q) + \beta(q)t'^2_B(q)$$

$$t_B^1(q) = \gamma(q)\, t'^1_A(q) + \delta(q)\, t'^1_B(q)$$

$$t_B^2(q) = \gamma(q)\, t'^2_A(q) + \delta(q)\, t'^2_B(q)$$

On pose :

$$\Delta = t'^1_A(q)\, t'^2_B(q) - t'^2_A(q)\, t'^1_B(q)$$

et il vient :

$$\hat{\alpha}(q) = \frac{t_A^1(q)\, t'^2_B(q) - t_A^2(q)\, t'^1_A(q)}{\Delta}$$

$$\hat{\beta}(q) = \frac{t_A^2(q)\, t'^1_A(q) - t_A^1(q)\, t'^2_A(q)}{\Delta}$$

$$\hat{\gamma}(q) = \frac{t_B^1(q)\, t'^2_B(q) - t_B^2(q)\, t'^1_B(q)}{\Delta}$$

$$\hat{\delta}(q) = \frac{t_B^2(q)\, t'^1_A(q) - t_B^1(q)\, t'^2_A(q)}{\Delta}$$

On choisit alors les paquets-test de façon que :

$$t_A^1(2q) \neq 0 \; ; \; t_A^2(2q) = 0 \; ; \; t_B^1(2q) = 0 \; ; \; t_B^2(2q) \neq 0$$

$$t_A^1(2q+1) = 0 \; ; \; t_A^2(2q+1) \neq 0 \; ; \; t_B^1(2q+1) \neq 0 \; ; \; t_B^2(2q+1) = 0$$

On a alors :

$$\hat{\alpha}(2q) = t_A^1(2q) \, t_B'^2(2q) \times \frac{\Delta^*}{\|\Delta\|^2}$$

$$\hat{\beta}(2q) = t_A^1(2q) \, t_A'^2(2q) \times \frac{\Delta^*}{\|\Delta\|^2}$$

$$\hat{\gamma}(2q) = t_B'^1(2q) \, t_B^2(2q) \times \frac{\Delta^*}{\|\Delta\|^2}$$

$$\hat{\delta}(2q) = t_B^2(2q) \, t_A'^1(2q) \times \frac{\Delta^*}{\|\Delta\|^2}$$

$$\hat{\alpha}(2q+1) = - \, t_A^2(2q+1) \, t_B'^1(2q+1) \times \frac{\Delta^*}{\|\Delta\|^2}$$

$$\hat{\beta}(2q+1) = - \, t_A^2(2q+1) \, t_A'^1(2q+1) \times \frac{\Delta^*}{\|\Delta\|^2}$$

$$\hat{\gamma}(2q+1) = - \, t_B^1(2q+1) \, t_B'^2(2q+1) \times \frac{\Delta^*}{\|\Delta\|^2}$$

$$\hat{\delta}(2q+1) = - \, t_B^1(2q+1) \, t_A'^2(2q+1) \times \frac{\Delta^*}{\|\Delta\|^2}$$

Ainsi, avec un choix spécifique des paquets-test, il est possible de récupérer facilement les signaux émis avec une polarisation croisée dans une même bande de fréquence lorsqu'il s'agit d'une modulation de type OFDM.

Selon un autre mode de réalisation représenté à la figure 4, on peut utiliser en réception deux circuits de calcul de Transformée de Fourier rapide 22A, 22B. Chaque circuit est prévu sur une voie de réception et donne en sortie respectivement des signaux r"(q) et i"' (q). Dans ce cas, il faut recréer le couplage entre les parties réelles - parties imaginaires et les trains d'onde représentés par les signaux a'(q), b'(q). Ceci est réalisé par le circuit de couplage 23 qui effectue l'opération suivante :

$$\begin{pmatrix} a'(q) \\ b'(q) \end{pmatrix} = \begin{pmatrix} 1+j \\ 1-j \end{pmatrix} \begin{pmatrix} r"'(q) \\ i"'(q) \end{pmatrix}$$

Dans ce cas aussi, On peut écrire :

$$\begin{pmatrix} a(q) \\ b(q) \end{pmatrix} = \begin{pmatrix} \alpha(q) & \beta(q) \\ \gamma(q) & \delta(q) \end{pmatrix} \begin{pmatrix} a'(q) \\ b'(q) \end{pmatrix} \text{ où la matrice } \begin{pmatrix} \alpha & \beta \\ \gamma & \delta \end{pmatrix}$$

est la même que précédemment.

Les figures 3 et 4 ont été décrites en se référant au cas où l'on émet les parties imaginaires sur une voie et les parties réelles sur une autre voie. Toutefois, l'invention s'applique aussi au cas où l'on sépare simplement en deux les signaux, les N/2 premiers étant émis sur une voie et les N/2 derniers sur l'autre voie.

## Revendications

1. Procédé d'émission d'un signal numérisé selon une modulation multiporteuse de type OFDM (Orthogonal Frequency Division Multiplexing) utilisant N canaux orthogonaux, caractérisé en ce que ledit signal module ces N canaux par l'intermédiaire d'une transformation de Fourier inverse fournissant N échantillons pour moduler les N canaux, en ce que les canaux sont ensuite divisés en deux, N/2 canaux correspondant à une première bande de fréquence étant transmis par une première voie d'émission selon une première polarisation et les N/2 canaux restant étant ramenés dans la même bande de fréquence et transmis par une deuxième voie d'émission selon une seconde polarisation croisée par rapport à la première.

2. Procédé selon la revendication 1, caractérisé en ce que le signal numérisé émis sur chaque voie comporte périodiquement des paquets-test permettant à la réception d'égaliser le canal de transmission.

3. Procédé selon la revendication 2, caractérisé en ce que l'on émet deux paquets-test successifs par voie.

4. Procédé selon la revendication 3, caractérisé en ce que les paquets-test sont choisis de telle sorte que :

$$t_A^1(2q) \neq 0 \;;\; t_A^2(2q) = 0 \;;\; t_B^1(2q) = 0 \;;\; t_B^2(2q) \neq 0$$

$$t_A^1(2q+1) = 0 \;;\; t_A^2(2q+1) \neq 0 \;;\; t_B^1(2q+1) \neq 0 \;;\; t_B^2(2q+1) = 0$$

où l'indice définit la voie, l'exposant le numéro du paquet sur la voie et q l'échantillon.

5. Emetteur pour la mise en oeuvre du procédé selon l'une quelconque des revendications 1 et 4, caractérisé en ce qu'il comporte un circuit de transformée de Fourier rapide inverse (FFT$^{-1}$) pour N échantillons, une première voie de transmission pour N/2 échantillons et une seconde voie de transmission pour les N/2 échantillons restant, chaque voie comportant un convertisseur numérique-analogique (4A, 4B) pour la conversion des échantillons en signal analogique, un circuit de transposition de fréquence (5A, 5B) du signal analogique permettant la transmission des deux voies dans une même bande de fréquence, un émetteur (6A, 6B) pour transmettre le signal transposé à une antenne (7A, 7B), les antennes ayant leur polarisation croisée.

6. Récepteur pour recevoir des signaux émis selon le procédé de l'une des revendications 1 à 4, caractérisé en ce qu'il comporte deux voies de réception pouvant recevoir chacune les signaux correspondant à N/2 échantillons émis dans une même bande de fréquence mais avec des polarisations croisées, chaque voie comportant une antenne (10A, 10B), ces antennes ayant leur polarisation croisée, un récepteur (11A, 11B) recevant le signal de l'antenne, un transposeur (12A, 12B) transposant le signal du récepteur en bande de base, un convertisseur analogique-numérique (13A, 13B) recevant le signal transposé pour fournir N/2 échantillons, les échantillons provenant des deux voies étant ensuite transmis à un additionneur (14), puis à un circuit de transformée de Fourier (16) pour démoduler les signaux provenant de l'additionneur.

7. Récepteur pour recevoir des signaux émis selon le procédé de l'une des revendications 1 à 4, caractérisé en ce qu'il comporte deux voies de réception pouvant recevoir chacune les signaux correspondant à N/2 échantillons émis dans une même bande de fréquence mais avec des polarisations croisées, chaque voie comportant une antenne (10A, 10B), ces antennes ayant leur polarisation croisée, un récepteur (11A, 11B) recevant le signal de l'antenne, un transposeur (12A, 12B) transposant le signal du récepteur en bande de base, un convertisseur analogique-numérique (13A, 13B) recevant le signal transposé pour fournir N/2 échantillons, un circuit de transformée de Fourier rapide (FFT) (22A, 22B) permettant de démoduler ces N/2 échantillons, les deux voies étant couplées en sortie par un circuit de couplage (23).

8. Récepteur selon la revendication 6 ou 7, caractérisé en ce qu'il comporte de plus des moyens pour reconnaître les paquets-test.

**Patentansprüche**

1. Verfahren zur Übertragung eines digitalisierten Signals mit Mehrträger-Modulation gemäß OFDM (orthogonales Frequenz-Multiple) unter Verwendung von N orthogonalen Kanälen, <u>dadurch gekennzeichnet,</u> daß das Signal N Kanäle mittels einer inversen FOURIER-Tansformation moduliert und N Proben zum Modulieren der N Kanäle liefert, daß die Kanäle zweigeteilt sind, wobei N/2 Kanäle einem ersten Frequenzband entsprechen, das über einen ersten Übertragungsweg mit einer ersten Polarisation gesendet wird, und wobei die verbleibenden N/2 Kanäle in dasselbe Frequenzband zurückgebracht und über einen zweiten Übertragungsweg mit einer zweiten, in bezug auf die erste gekreuzten Polarisation übertragen werden.

2. Verfahren nach Anspruch 1, <u>dadurch gekennzeichnet,</u> daß das in jedem Weg übertragene digitalisierte Signal periodisch Testpakete enthält, die beim Empfang eine Entzerrung des Übertragungskanals erlauben.

3. Verfahren nach Anspruch 2, <u>dadurch gekennzeichet,</u> daß je Weg zwei aufeinanderfolgende Testpakete übertragen werden.

4. Verfahren nach Anspruch 3, <u>dadurch gekennzeichnet,</u> daß die Testpakete so gewählt werden, daß:

$$t_A^1 (2q) \neq 0 \; ; \; t_A^2 (2q) = 0 \; ; \; t_B^1 (2q) = 0 \; ; \; t_B^2 (2q) = 0$$

$$t_A^1 (2q + 1) = 0 \; ; \; t_A^2 (2q + 1) \neq 0 \; ; \; t_B^1 (2q + 1) \neq 0 \; ; \; t_B^2 (2q + 1) = 0.$$

wobei der Index den Weg, der Exponent die Nummer des Pakets in dem Weg und q die Abtastung bezeichnet.

5. Sender zur Durchführung des Verfahrens nach einem der Ansprüche 1 bis 4, <u>dadurch gekennzeichnet,</u> daß er eine Schaltung zur inversen schnellen FOURIER-Transformation (FFT$^{-1}$) für N Abtastungen, einen ersten Übertragungsweg für N/2 Abtastungen und einen zweiten Übertragungsweg für die übrigen N/2 Abtastungen enthält, wobei jeder Weg einen Digital/Analog-Wandler (4A, 4B) zum Umsetzen der Abtastungen in ein analoges signal, eine Frequenz-Umsetzschaltung (5A, 5B) für das analoge Signal, die die Übertragung der beiden Wege in demselben Frequenzband erwöglicht, und einen Sender (6A, 6B) zum Übertragen des umgesetzten Signals zu einer Antenne (7A, 7B) enthält, und wobei die Polarisationen der Antennen gekreuzt sind.

6. Empfänger zum Empfang von Signalen, die nach dem Verfahren gemäß einem der Ansprüche 1 bis 4 gesendet werden, <u>dadurch gekennzeichnet,</u> daß er zwei Empfangswege, die jeweils in der Lage sind, die N/2 Abtastungen entsprechenden Signale zu empfangen, die in ein und demselben Frequenzband, aber mit Kreuzpolarisatian gesendet werden, wobei jeder Weg eine Antenne (10A, 10B) enthält, und die Polarisationen der Antennen gekreuzt sind, und einen Emgfänger (11A, 11B) zum Empfang des Antennensignals, einen Umsetzer (12A, 12B) zum Umsetzen des Empfängersignals in ein Basisband, einen das umgesetzte Signal empfangenden Analog/Digital-Wandler (13A, 13B) zum Bilden der N/2 Abtastungen enthält, wobei die von den beiden Wegen kommenden Abtastungen dann zu einer Addierstufe (14) und danach zu einer Schaltung (16) zur FOURIER-Transformation übertragen werden, um die von der Addierstufe kommenden Signale zu demodulieren.

7. Empfänger zum Empfang von Signalen, die nach dem Verfahren gemäß einem der Ansprüche 1 bis 4 gesendet werden, <u>dadurch gekennzeichnet,</u> daß er zwei Empfangswege, die jeweils in der Lage sind, die N/2 Abtastungen entsprechenden Signale zu empfangen, die in ein und demselben Frequenzband, aber mit Kreuzpolarisation gesendet werden, wobei jeder weg eine Antenne (10A, 10B) enthält und die Polarisationen dieser Antennen gekreuzt sind, und einen das Antennensignal empfangenden Empfänger (11A, 11B), einen Umsetzer (12A, 12B) zum Umsetzen des Empfängersignals in das Basisband, einen das umgesetzte Signal empfangenden Analog/Digital-Wandler (13A, 13B) zum Bilden von N/2 Abtastungen und eine Schaltung (22A, 22B) für eine schnelle FOURIER-Transformation (FFT) enthält, die eine Demodulation der N/2 Abtastungen ermöglicht, wobei die beiden Wege am Ausgang durch eine Kopplungsschaltung (23) miteinander gekoppelt sind.

**8.** Empfänger nach einem der Ansprüche 6 oder 7, <u>dadurch gekennzeichnet,</u> daß er ferner Mittel zum Erkennen der Testpakete enthält.

## Claims

**1.** Process for transporting a digitized signal according to OFDM (Orthogonal Frequency Division Multiplexing) type multicarrier modulation using N orthogonal channels, characterized in than said signal modulates these N channels by way of an inverse Fourier transformation yielding N samples so as to modulate the N channels, in that the channels are then divided into two, N/2 channels corresponding to a first frequency band being sent via a first transmission track according to a first polarization and the remaining N/2 channels being brought back into the same frequency band and sent via a second transmission track according to a second polarization crossed with respect to the first.

**2.** Process according to Claim 1, characterized in that the digitize signal transmitted on each track includes, periodically, test-packets allowing the send channel to be equalized on reception.

**3.** Process according to Claim 2, characterized in that two successive test-packets are transmitted per track.

**4.** Process according to Claim 3, characterized in that the test-packets are chosen in such a way that:

$$t_A^1(2q) \neq 0 \quad t_A^2(2q) = 0 \quad t_B^1(2q) = 0 \quad t_B^2(2q) \neq 0$$

$$t_A^1(2q+1) = 0 \quad t_A^2(2q+1) \neq 0 \quad t_B^1(2q+1) \neq 0 \quad t_B^2(2q+1) = 0.$$

where the index defines the track, the exponent the number of the packet on the track and q the sample.

**5.** Transmitter for the implementation of the process according to any one of Claims 1 to 4, characterized in that it includes a circuit for inverse fast Fourier transform (FFT$^{-1}$) for N samples, a first send track for N/2 samples and a second send track for the remaining N/2 samples, each track including a digital/analog converter (4A, 4B) for converting the samples into an analogue signal, a frequency transposition circuit (5A, 5B) for the analogue signal enabling the two tracks to be transmitted in one and the same frequency band, a transmitter (6A, 6B) for transmitting the transposed signal to an antenna (7A, 7B), the antennas having their polarization crossed.

**6.** Receiver for receiving signals transmitted according in the process of one of Claims 1 to 4, characterized in that it includes two reception tracks each able to receive the signals corresponding to N/2 samples, transmitted in one and the same frequency band but with cross-polarizations, each track comprising an antenna (10A, 10B), these antennas having their polarization crossed, a receiver (11A, 11B) receiving the signal from the antenna, a transposer (12A, 12B) transposing the signal from the receiver into baseband, an analogue/digital converter (13A, 13B) receiving the transposed signal so as to yield N/2 samples, the samples originating from the two tracks subsequently being transmitted to an adder (14), and then to a Fourier transform circuit (16) so as to demodulate the signals originating from the adder.

**7.** Receiver for receiving signals transmitted according to the process of one of Claims 1 to 4, characterized in that it includes two reception tracks each able to receive the signals corresponding to N/2 samples transmitted in one and the same frequency band but with cross-polarizations, each track comprising an antenna (10A, 10B), these antennas having their polarization crossed, a receiver (11A, 11B) receiving the signal from the antenna, a transposer (12A, 12B) transposing the signal from the receiver into baseband, an analogue/digital converter (13A, 13B) receiving the tranposed signal so as to yield N/2 samples, a fast Fourier transform circuit (FFT) (22A, 22B) making it possible to demodulate these N/2 samples, the two tracks being coupled at output by a coupling circuit (23).

**8.** Receiver according to Claim 6 or 7, characterized in that it moreover includes means for recognizing the test-packets.

FIG. 1

EP 0 672 320 B1

FIG.2

**FIG.3**

EMISSION | TRANSMISSION | RECEPTION

a(q)
b(q)
2
FFT-1
R(n)
I(n)
7A
7B
R'(n)
I'(n)
11A
11B
R''(n)
I''(n)
R'''(n)
I'''(n)
16
FFT
a'(q)
b'(q)
EGALIS.
â(q)
b̂(q)

**FIG.4**

a(q)
b(q)
2
FFT-1
R(n)
I(n)
TRANSMISSION
R'''(n)
I'''(n)
22A
FFT
22B
FFT
r'''(q)
i'''(q)
23
$\begin{pmatrix} 1 & j \\ 1 & -j \end{pmatrix}$
a'(q)
b'(q)
"Couplage FFT"